# EUROPÄISCHE PATENTANMELDUNG

(11) **EP 3 437 831 A1**
(43) Veröffentlichungstag der Anmeldung: **06.02.2019**
(21) Anmeldenummer: 18197430.4
(22) Anmeldetag: 21.10.2011
(51) Int. Cl.: B29C 49/78

(54) **STRECKBLASMASCHINE UND VERFAHREN**

(30) Priorität: 21.10.2010 DE 102010049025
(62) Teilanmeldung aus: 11186079.7
(71) Anmelder: Krones AG, 93073 Neutraubling (DE)
(72) Erfinder: Voth, Klaus, 93073 Neutraubling (DE)
(74) Vertreter: Bittner, Bernhard

(57) **Zusammenfassung**

Die Erfindung ist auf eine Streckblasmaschine (1) zum Umformen von Kunststoffvorformlingen in Behältnisse (2), umfassend eine Blaseinheit (4), die mindestens einen ersten und einen zweiten Formträger (6, 8) zum Aufnehmen von jeweils mindestens einem Blasformteil (10, 12) aufweist, die bezüglich einander bewegbar sind, miteinander zum Ausbilden eines ersten Arbeitsraums (14) zur Aufnahme der Behältnisse (2) verbindbar sind und zum Ausgeben der Behältnisse (2) voneinander lösbar sind, wobei zwischen mindestens einem Blasformteil (10) und zumindest dem ersten Formträger (6) ein zweiter Arbeitsraum (16) ausgebildet ist, und ein Fluidkommunikationssystem (18) zum Leiten eines Arbeitsfluids, das dem ersten Arbeitsraum (14) und dem zweiten Arbeitsraum (16) zuführbar ist, gerichtet. Erfindungsgemäß ist an dem ersten Formträger (6) und/oder an einer zum Zuführen des Arbeitsfluids in den Innenraum der Behältnisse (2) vorgesehenen Expandiereinrichtung (20) mindestens eine Ventileinrichtung (24a) zum zeitweise vollständigen Trennen der Fluidkommunikation zwischen mindestens einem der Arbeitsräume (14, 16) und dem Fluidkommunikationssystem (18) derart angeordnet, dass der Druck des Arbeitsfluids innerhalb des Fluidkommunikationssystems (18) bei getrennter Fluidkommunikation unabhängig von Zustandsänderungen des zweiten Arbeitsraums (16) ist.

## Beschreibung

Die Erfindung beschreibt eine Streckblasmaschine zum Umformen von Kunststoffvorformlingen in Behältnisse nach dem Oberbegriff des Patentanspruches 1 und ein Verfahren zum Umformen von Kunststoffvorformlingen in Behältnisse gemäß dem Oberbegriff des Patentanspruches 10.

Es werden somit insbesondere Einrichtungen und Schritte beschrieben, die vor, während und/oder nach dem Umformen eines Vorformlings aus thermoelastischen Material Einsatz finden bzw. erfolgen. Ein wesentlicher Faktor ist dabei die Bereitstellung sowie der Einsatz eines Funktionsfluids. Zur Umformung von Vorformlingen in Behältnisse wird stets ein Arbeitsfluid bereitgestellt, dessen Erzeugung bzw. Konditionierung, d.h. beispielsweise neben anderem die Komprimierung, Reinigung und/oder Temperierung, sehr ressourcenaufwendig, insbesondere energieaufwendig, ist.

Aus der US2005/0142243A1 ist beispielsweise eine Blasformeinrichtung bekannt, gemäß der ein Arbeitsfluid über ein Fluidkommunikationssystem in einen ersten Arbeitsraum zum Expandieren des Vorformlings einbringbar ist. Ferner ist das Arbeitsfluid auch über dasselbe Fluidkommunikationssystem einem zweiten Arbeitsraum, der zwischen einem Blasformteil und einem Formträger ausgebildet ist, zum Druckkraftbeaufschlagen des Blasformteils zuführbar. Im Falle der Entnahme der erzeugten Flasche entweicht das gesamte Arbeitsfluid aus dem Fluidkommunikationssystem, wodurch für einen weiteren Blasvorgang nicht nur das Arbeitsfluid im Volumen der Arbeitsräume, sondern auch im Volumen des Fluidkommunikationssystems neu bereitzustellen ist.

Aufgrund der ressourcenaufwendigen Konditionierung des Arbeitsfluids ergibt sich bereits bei kleinen Anlagen ein deutliches Einsparpotential, zudem besteht Potential, zeitliche Verzögerungen zu reduzieren, da das Auffüllen des Fluidkommunikationssystems jeweils eine gewisse Zeitdauer bedingt.
Es ist somit Aufgabe der vorliegenden Erfindung, eine Vorrichtung und ein Verfahren bereitzustellen, durch die der Verbrauch des zur Umformung von Kunststoffvorformlingen erforderlichen Arbeitsfluids reduziert wird.

Die Lösung der Aufgabe erfolgt durch eine Streckblasmaschine zum Umformen von Kunststoffvorformlingen in Behältnisse, die mindestens eine Blaseinheit, die mindestens einen ersten und einen zweiten Formträger zum Aufnehmen von jeweils mindestens einem Blasformteil aufweist, die bezüglich einander bewegbar sind, miteinander zum Ausbilden eines ersten Arbeitsraums zur Aufnahme der Behältnisse verbindbar sind und zum Ausgeben der Behältnisse voneinander lösbar sind, wobei zwischen mindestens einem Blasformteil und zumindest dem ersten Formträger ein zweiter Arbeitsraum ausgebildet ist, und ein Fluidkommunikationssystem, insbesondere eine Leitungsverbindung, zum Leiten eines Arbeitsfluids, das dem ersten Arbeitsraum und dem zweiten Arbeitsraum zuführbar ist, umfasst.

Erfindungsgemäß ist an dem ersten Formträger und/oder an einer zum Zuführen des Arbeitsfluids in den Innenraum der Behältnisse vorgesehenen Expandiereinrichtung, insbesondere einer Reckstange, mindestens eine Ventileinrichtung zum zeitweise vollständigen Trennen der Fluidkommunikation zwischen mindestens einem der Arbeitsräume und dem Fluidkommunikationssystem derart angeordnet, dass der Druck des Arbeitsfluids innerhalb des Fluidkommunikationssystems bei getrennter Fluidkommunikation unabhängig von Zustandsänderungen des zweiten Arbeitsraums ist. Als Zustandsänderungen können bevorzugt Druckänderungen und/oder Volumenänderungen verstanden werden. Gegenüber der aus dem Stand der Technik bekannten Vorrichtung muss in einem Arbeitszyklus bestehend aus dem Aufnehmen eines Vorformlings, Umformen des Vorformlings in ein Behältnis und Ausgeben des Behältnisses lediglich Arbeitsfluid im Volumen des ersten und/oder zweiten Arbeitsraums bereitgestellt werden, wodurch eine wesentlich ressourcenschonendere Vorrichtung gegeben ist.

Die Vorformlinge bestehen bevorzugt aus Kunststoff und insbesondere aus PET. Als Behälter können neben anderem Eimer, Becher, Dosen, Flaschen und/oder Kanister verstanden werden. Die Behälter können bevorzugt verschiedene Größen aufweisen, wobei in einer Blaseinheit der vorliegenden Erfindung besonders bevorzugt stets Behälter mit derselben Größe erzeugt werden.

Neben dem ersten und zweiten Formträger kann ebenfalls ein dritter Formträger vorgesehen sein, wobei der dritte Formträger dann bevorzugt zumindest abschnittsweise im Bereich des Bodenteils des Behältnisses angeordnet ist.

Gemäß einer weiteren bevorzugten Ausführungsform der vorliegenden Erfindung ist die Ventileinrichtung eine Hochdruckventileinrichtung und insbesondere genau ein oder mehrere Hochdruckventile.
Diese Ausführungsform ist vorteilhaft, da das Arbeitsfluid mit einem Druck von 20bar bis 60bar, bevorzugt von 30bar bis 50bar und besonders bevorzugt von ca. 40 bar oder von genau 40bar in die Arbeitsräume einbringbar ist.

Gemäß einer weiteren bevorzugten Ausführungsform der vorliegenden Erfindung ist die Ventileinrichtung am Formträger in einer ersten Richtung, insbesondere in Folge einer Schwenkbewegung um eine gemeinsame Achse der Formträger, bewegbar, die Ventileinrichtung an der Expandiereinrichtung in einer zweiten Richtung, insbesondere in vertikaler Richtung, bewegbar und die Gesamtheit aus Blaseinheit und Expandiereinrichtung in einer weiteren Richtung, insbesondere in einer Ebene auf einer bevorzugt zumindest teilweise kurvenförmigen, insbesondere kreisförmigen, Transportbahn bewegbar.

Diese Ausführungsform ist vorteilhaft, da die Ventileinrichtung/en mit den Einrichtungen, denen sie zugeordnet sind, mitbewegbar sind, wodurch Relativbewegungen der Ventileinrichtung/en zu den zugeordneten Einrichtungen vermieden werden können. Dies führt dazu, dass die Ventileinrichtungen gegenüber den zugeordneten Einrichtungen sehr stabil fixierbar sind und die Gefahr des Verschleißes aufgrund von beispielsweise dauerhaften Schwenkbewegungen der Ventileinrichtung gegenüber der zugeordneten Einrichtung ausgeschlossen werden können. Als zugeordnete Einrichtungen können hierbei jeweils beispielsweise die Formträger oder die Expandiereinrichtung (insbesondere eine Blasdüse und/oder Reckstange) verstanden werden. Besonders bevorzugt sind dabei die erste Richtung und die zweite Richtung von der weiteren Richtung verschieden.

Gemäß einer weiteren bevorzugten Ausführungsform der vorliegenden Erfindung weist die Ventileinrichtung der Expandiereinrichtung ein Ventilgehäuse auf, das an einem Linearschlitten angebracht ist.
Diese Ausführung ist vorteilhaft, da die Ventileinrichtung dadurch mit der Expandiereinrichtung in der zweiten Richtung verfahrbar bzw. bewegbar ist.

Gemäß einer weiteren bevorzugten Ausführungsform der vorliegenden Erfindung ist das Ventilgehäuse der am ersten Formträger angeordneten Ventileinrichtung zumindest teilweise durch den ersten Formträger ausgebildet bzw. die Ventileinrichtung ist ein Bestandteil des ersten Formträgers bzw. der Körper des Ventils ist der erste Formträger und die Funktion eines Ventils befindet sich im Bauteil "Formträger".

Diese Ausführungsform ist vorteilhaft, da eine sehr kleine Bauform realisierbar ist, wodurch Platz und Material eingespart werden kann. Ferner ergibt sich durch den geringeren Materialbedarf ein geringeres Gesamtgewicht der bewegten Einrichtungen, wodurch Antriebsenergie eingespart werden kann. Ferner ist denkbar, dass die Ventileinrichtung größten Teils oder vollständig durch den Formträger ausgebildet ist. Somit kann mit der Anbringung der Ventileinrichtung am Formträger auch eine Anbringung im Formträger verstanden werden.

Gemäß einer weiteren bevorzugten Ausführungsform der vorliegenden Erfindung ist das Arbeitsfluid bevorzugt ein Gas, wie z.B. Luft, und besonders bevorzugt Reinluft.

Diese Ausführungsform ist vorteilhaft, da ein gasförmiges Arbeitsfluid sehr einfach den einzelnen Arbeitsräumen zuführbar ist und ebenfalls einfach daraus abführbar ist.

Gemäß einer weiteren bevorzugten Ausführungsform der vorliegenden Erfindung ist die Ventileinrichtung aktiv ansteuerbar.

Diese Ausführungsform ist vorteilhaft, da durch eine aktive Ansteuerung eine Öffnungs- und Schließbewegung der Ventileinrichtung/en bewirkt werden kann, die eine sehr effiziente Nutzung des Arbeitsfluids ermöglicht. Es ist dabei denkbar, dass die Ventileinrichtung/en elektrisch, hydraulisch, mechanisch und/oder pneumatisch betätigbar sind bzw. betätigt werden.

Gemäß einer weiteren bevorzugten Ausführungsform der vorliegenden Erfindung sind der erste Arbeitsraum und der zweite Arbeitsraum durch eine bewegbare Wandung, insbesondere eine bewegbare Blasform, voneinander abgegrenzt.

Diese Ausführungsform ist vorteilhaft, da die Blasform 0,1-2mm, bevorzugt 0,3-1 mm und besonders bevorzugt ca. oder genau 0,5mm zum Reduzieren von Oberflächenunregelmä-ßigkeiten des Behältnisses verschiebbar ist. Die bewegliche Wandung ermöglicht, dass der Formträger eine Formzuhaltung darstellt, d.h. dass der zweite Arbeitsraum mit Druck, insbesondere Hochdruck, beaufschlagt wird, wenn der Formträger bzw. die Formträger verriegelt sind. Dies entspricht im Wesentlichen der Funktion eines Pneumatikzylinders. Es ist ebenfalls denkbar, dass beide Formträger jeweils zweite Arbeitsräume aufweisen, die zumindest zeitweise über Ventileinrichtungen mit dem Fluidkommunikationssystem verbunden sind. Es ist ferner vorstellbar, dass das Ventil der Formzuhaltung mit einer Leitungsverbindung, insbesondere einer Schlauchleitung oder einer Rohrleitung, mit dem ersten Formträger verbunden ist.

Gemäß einer weiteren bevorzugten Ausführungsform der vorliegenden Erfindung entsprechen das Volumen des ersten Arbeitsraums und das Volumen des zweiten Arbeitsraums in der Summe dem Gesamtarbeitsraumvolumen.

Diese Ausführungsform ist vorteilhaft, da z.B. einer Steuerung genau vorgebbar ist, wieviel Arbeitsfluid sich bei welchem Druck in welchem Arbeitsraum bzw. in allen Arbeitsräumen befindet. Das Volumen der Fluidkommunikationseinrichtung wird nicht als Arbeitsvolumen angesehen, d.h., dass das Volumen der Fluidkommunikationseinrichtung vom Arbeitsvolumen durch die Ventileinrichtung/en räumlich getrennt ist und funktional trennbar ist. Bevorzugt ist mit dem Fluidkommunikationssystem eine Arbeitsfluidquelle gekoppelt bzw. verbunden. Ferner ist denkbar, dass stromaufwärts vor der Ventileinrichtung eine Temperierungseinrichtung zum Temperieren der Behältnisse, des Arbeitsfluids, der Blaseinheit und/oder der Expandiereinrichtung vorgesehen ist.

Die vorliegende Erfindung ist ebenfalls auf ein Verfahren zum Umformen von Kunststoffvorformlingen in Behältnisse gerichtet, das mindestens die nachfolgend genannten Schritte umfasst. Der erste Schritt bezieht sich auf das Bereitstellen eines Arbeitsfluids mittels eines Fluidkommunikationssystems zum Leiten des Arbeitsfluids von einer Fluidquelle zu mindestens einer ersten Ventileinrichtung, die zeitweise einen ersten Arbeitsraum vollständig von dem Fluidkommunikationssystem trennt, und/oder mindestens einer zweiten Ventileinrichtung, die zeitweise einen zweiten Arbeitsraum von dem Fluidkommunikationssystem trennt, wobei der erste Arbeitsraum durch mindestens einen ersten und einen zweiten Formträger zum Aufnehmen von jeweils mindestens einem Blasformteil, die zueinander bewegbar, miteinander verbindbar und zum Ausgeben der Behältnisse voneinander lösbar sind, ausgebildet wird und ein zweiter Arbeitsraum zumindest zwischen einem Blasformteil und dem ersten Formträger ausgebildet ist. Der zweite Schritt bezieht sich auf das Trennen der Fluidkommunikation zwischen dem Fluidkommunikationssystem und dem zweiten Arbeitsraum.

Erfindungsgemäß wird bei getrennter Fluidkommunikation eine Zustandsänderung im zweiten Arbeitsraum unabhängig vom Zustand des Arbeitsfluids im Fluidkommunikationssystem durchgeführt.
Weitere Vorteile, Ziele und Eigenschaften vorliegender Erfindung werden anhand nachfolgender Beschreibung anliegender Zeichnungen erläutert, in welcher beispielhaft Streckblasmaschinen und Blaseinheiten zum Umformen von Kunststoffvorformlingen in Behältnisse dargestellt sind. Bauteile der Streckblasmaschine und der Blaseinheit, welche in den Figuren wenigstens im Wesentlichen hinsichtlich ihrer Funktion übereinstimmen, können hierbei mit gleichen Bezugszeichen gekennzeichnet sein, wobei diese Bauteile nicht in allen Figuren beziffert oder erläutert sein müssen.

Darin zeigen:
- Fig. 1: eine schematische Querschnittdarstellung eines Teils einer erfindungsgemäßen Blasmaschine;
- Fig. 2: eine zweidimensionale Seitenansicht eines Teils einer erfindungsgemäßen Blasmaschine; und
- Fig. 3a - 3c: schematische Darstellungen verschiedener Ventilanordnungen.

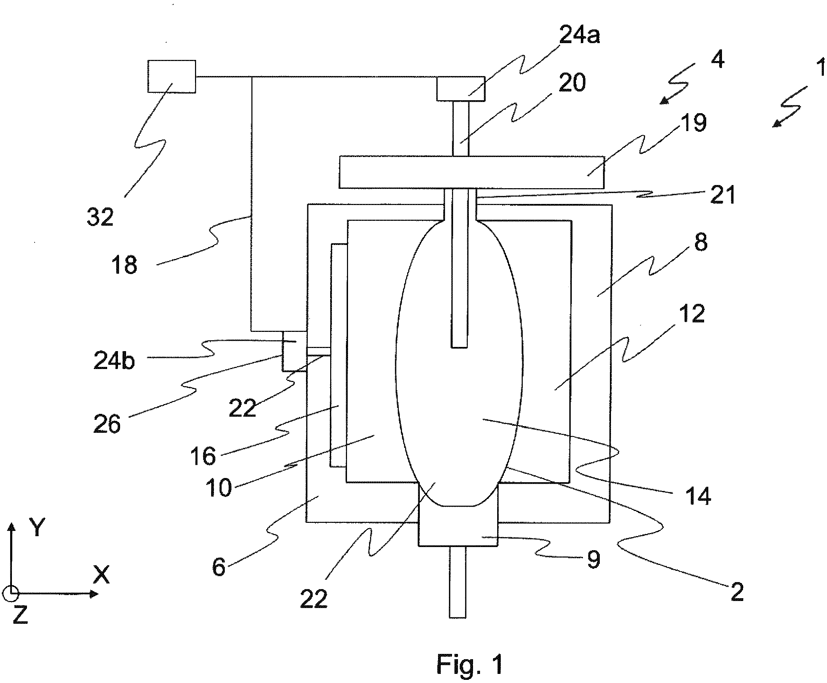

In Figur 1 ist mit dem Bezugszeichen 1 eine Streckblasmaschine gekennzeichnet. Die Streckblasmaschine 1 ist lediglich teilweise dargestellt und dient zur Umformung von Vorformlingen in Behältnisse 2. Das Bezugszeichen 4 kennzeichnet die Blaseinheit, die mindestens aus einem ersten Formträger 6 und einem zweiten Formträger 8 besteht. Wie in Fig. 1 gezeigt ist es jedoch ebenfalls denkbar, dass die Blaseinheit noch einen oder mehrere weitere Formträger 9 bzw. Formeinheiten aufweist. Eine Formeinheit ist hierbei als eine Einrichtung zu verstehen die einen Oberflächenabschnitt aufweist, welcher der Negativform eines Oberflächenabschnitts des Behältnisses 2 entspricht.

Der erste Formträger 6 dient bevorzugt zur Aufnahme eines ersten Blasformanteils 10, der eine bewegliche Wandung darstellt. Der zweite Formträger 8 dient bevorzugt ebenfalls zur Aufnahme eines Blasformanteils 12. Besonders bevorzugt sind der zweite Formträger 8 und der zweite Blasformanteil 10 relativ zueinander unbeweglich angeordnet, wobei denkbar ist, dass die Blasformanteile 10, 12 auswechselbar sind.

Die inneren Oberflächen der Blasformteile 10, 12, d.h. die dem Zentrum der Blasformeinheit 4 zugewanden Oberflächenanteile begrenzen einen Hohlraum, der einen ersten Arbeitsraum 14 darstellt. Ein zweiter Arbeitsraum 16 ist bevorzugt durch einen Anteil der äußeren Oberfläche des ersten Blasformanteils 10 und einen Anteil der inneren Oberfläche des ersten Formträgers 6 begrenzt.

Mittels einem Fluidkommunikationssystems 18, das aus Leitungen, insbesondere Rohrleitungen und/oder Schlauchleitungen, besteht, ist ein Arbeitsfluid von einer Quelle 32, die beispielsweise neben anderem ein weiteres Fluidkommunikationssystem 18, eine Ventileinrichtung, ein Speicher und/oder eine Kompressoreinheit sein kann, den Ventilen 24a, 24b zuführbar. Die Ventile 24a, 24b trennen das Fluidkommunikationssystem 18 räumlich und zeitweise funktional von dem ersten und dem zweiten Arbeitsraum 14, 16. Eine funktionale Trennung kann hierbei als eine Unterbrechung der Fluidkommunikation zwischen dem Fluidkommunikationssystems 18 und mindestens einem und bevorzugt allen Arbeitsräumen 14, 16 verstanden werden. Bei offener Ventileinrichtung 24a ist ein Eintritt des Arbeitsfluids durch die Ventileinrichtung 24a hindurch in den ersten Arbeitsraum 14 hinein möglich. Der erste Arbeitsraum 14 erstreckt sich somit bevorzugt von der Ventileinrichtung 24a an in Fluidflussrichtung abwärts.

Das Arbeitsfluid durchfließt zum Spülen des Behältnisses 2 nach der Ventileinrichtung 24a innerhalb einer Expandiereinrichtung 20, die besonders bevorzugt eine Reckstange ist, eine Abdichteinrichtung 19, die zumindest zeitweise den Austritt des Arbeitsfluids aus dem Behältnis 2 verhindert. Die Dichtwirkung wird bevorzugt durch ein Zusammenwirken der Mündung 21 des Behältnisses 2, insbesondere eines Tragrings desselben, mit der Abdichteinrichtung 19 bewirkt.

Der zweite Arbeitsraum 16 steht bevorzugt über ein Verbindungsstück 22 mit der Ventileinrichtung 24b in Verbindung, wobei das Verbindungsstück 22 besonders bevorzugt einen Teil des zweiten Arbeitsraums 16 ausbildet. Die Ventileinrichtungen 24a, 24b weisen bevorzugt Ventilgehäuse 26 auf, die an dem ersten Formträger 6 bzw. an der Expandiereinrichtung 20 angebracht sein können. Besonders bevorzugt sind die Ventilgehäuse 26 bzw. die Ventileinrichtungen 24a, 24b direkt an dem ersten Formträger 6 bzw. an der Expandiereinrichtung 20 angebracht.

Die Formträger 6, 8 sind bevorzugt in der X-Richtung, insbesondere horizontal, bewegbar und die Expandiereinrichtung 20 ist samt der Ventileinrichtung 24a bevorzugt in der Y-Richtung, insbesondere vertikal, bewegbar und die Blaseinheit 4 ist auf einer Bahn, bevorzugt einer runden Bahn, transportierbar.

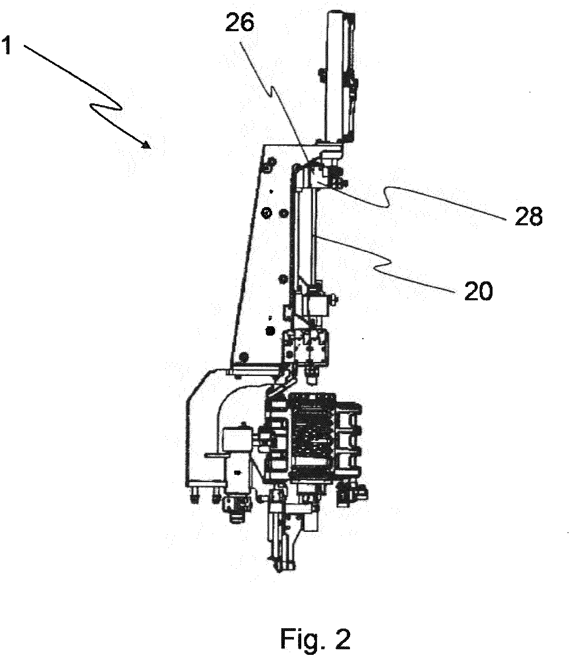

In Figur 2 ist eine zweidimensionale Darstellung eines Teils einer Streckblasmaschine 1 abgebildet. Der dargestellte Teil der Streckblasmaschine 1 weist dabei neben anderem die ersten und zweiten Formträger 6, 8, die Reckstange 20 und den Linearschlitten 28, insbesondere ein Reckschlitten, auf, an dem das Ventilgehäuse 26 angeordnet ist. Die Reckstange 20 ist bevorzugt mit dem Ventilgehäuse 26 verbunden bzw. direkt daran oder daneben angeordnet und bewegt sich somit in Folge einer Bewegung des Linearschlittens 28 mit, besonders bevorzugt befindet sich die Aufnahme der Reckstange 20 im Ventilgehäuse 26.

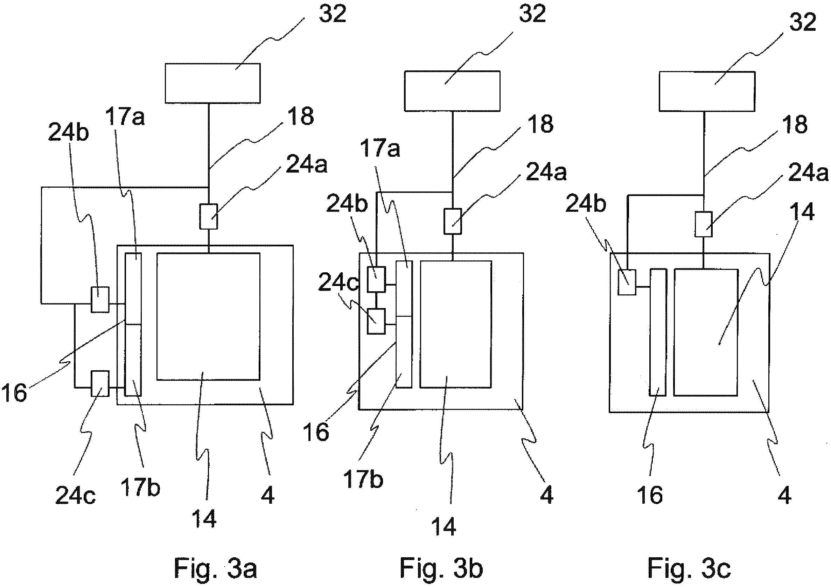

In den Figuren 3a-3c sind verschiedene schematische Darstellungen gezeigt, die jeweils unterschiedliche Aufbauten des Fluidkommunikationssystems 18 bzw. der Ventilanordnung/en darstellen.

In Fig. 3a sind die Ventileinrichtungen 24b und 24c parallel zueinander in das Fluidkommunikationssystem 18 eingebunden. Die Ventileinrichtungen 24b und 24c sind auch nicht direkt an der Blaseinheit 4 bzw. dem ersten Formträger (nicht gekennzeichnet) angeordnet, sondern beabstandet dazu, wobei die Ventileinrichtung/en 24b, 24c bevorzugt auch an dem ersten Formträger 6 bzw. mindestens eine der Ventileinrichtungen 24b, 24c an dem ersten Formträger 6 angeordnet bzw. ausgebildet ist. Durch die Bezugszeichen 17a und 17b sind Teile des zweiten Arbeitsraums 16 gekennzeichnet. Diese Teile 17a, 17b können wiederum über eine Ventileinrichtung miteinander verbunden sein.

Es ist dieser Darstellung ferner zu entnehmen, dass das gesamte Fluidkommunikationssystem 18 über die Ventileinrichtungen 24a-24c vollständig von dem ersten und dem zweiten Arbeitsraum 14, 16 trennbar ist bzw. eine Fluidkommunikation zwischen dem Fluidkommunikationssystem 18 und den ersten und zweiten Arbeitsräumen 14, 16 vollständig unterbindbar ist. Somit ist der Druck des Arbeitsfluids innerhalb des Fluidkommunikationssystems 18 bei getrennter Fluidkommunikation unabhängig von Zustandsänderungen des zweiten Arbeitsraums 16, wodurch in einem Arbeitszyklus bestehend aus dem Aufnehmen eines Vorformlings, Umformen des Vorformlings in ein Behältnis und Ausgeben des Behältnisses lediglich Arbeitsfluid im Volumen des ersten und/oder zweiten Arbeitsraums 14, 16 bereitgestellt werden muss.

In Fig. 3b sind ebenfalls zwei Ventileinrichtungen 24b, 24c vorgesehen, die hintereinander, d.h. in Reihe, angeordnet sind. In dieser Darstellung sind die Ventileinrichtungen 24b, 24c in oder an der Blaseinheit 4, insbesondere an dem ersten Formträger 6, angeordnet.

Es erschließt sich somit aus den Figuren 3a und 3b, dass beliebige "Verschaltungen" einer beliebigen Anzahl an Ventileinrichtungen, d.h. Parallelschaltungen oder Reihenschaltungen oder kombinierte Parallel-/Reihenschaltungen, vorgesehen sein können.

Fig. 3c zeigt eine Darstellung, gemäß der nur eine Ventileinrichtung 24b vorgesehen ist, die den zweiten Arbeitsraum 16 mit dem Fluidkommunikationssystem 18 verbindet. Die Ventileinrichtung 24b ist auch in oder an dem ersten Formträger 6 angeordnet.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Streckblasmaschine
- 2: Behältnis
- 4: Blaseinheit
- 6: Erster Formträger
- 8: Zweiter Formträger
- 9: Weiterer Formträger
- 10: Erstes Blasformteil
- 12: Zweites Blasformteil
- 14: Erster Arbeitsraum
- 16: Zweiter Arbeitsraum
- 17a: Erster Teil des zweiten Arbeitsraums
- 17b: Zweiter Teil des zweiten Arbeitsraums
- 18: Fluidkommunikationssystem
- 19: Abdichteinrichtung
- 20: Expandiereinrichtung
- 21: Mündung
- 22: Verbindungsstück
- 24a, 24b, 24c: Ventileinrichtung
- 26: Ventilgehäuse
- 28: Linearschlitten
- 32: Quelle
- X: Richtung bzw. Bahn
- Y: Richtung bzw. Bahn
- Z: Richtung bzw. Bahn

## Patentansprüche

1. Streckblasmaschine (1) zum Umformen von Kunststoffvorformlingen in Behältnisse (2), umfassend
eine Blaseinheit (4), die mindestens einen ersten und einen zweiten Formträger (6, 8) zum Aufnehmen von jeweils mindestens einem Blasformteil (10, 12) aufweist, die bezüglich einander bewegbar sind, miteinander zum Ausbilden eines ersten Arbeitsraums (14) zur Aufnahme der Behältnisse (2) verbindbar sind und zum Ausgeben der Behältnisse (2) voneinander lösbar sind, wobei zwischen mindestens einem Blasformteil (10) und zumindest dem ersten Formträger (6) ein zweiter Arbeitsraum (16) ausgebildet ist, und
ein Fluidkommunikationssystem (18) zum Leiten eines Arbeitsfluids, das dem ersten Arbeitsraum (14) und dem zweiten Arbeitsraum (16) zuführbar ist, **dadurch gekennzeichnet, dass**
an dem ersten Formträger (6) und/oder an einer zum Zuführen des Arbeitsfluids in den Innenraum der Behältnisse (2) vorgesehenen Expandiereinrichtung (20) mindestens eine Ventileinrichtung (24a, 24b, 24c) zum zeitweise vollständigen Trennen der Fluidkommunikation zwischen mindestens einem der Arbeitsräume (14, 16) und dem Fluidkommunikationssystem (18) derart angeordnet ist, dass der Druck des Arbeitsfluids innerhalb des Fluidkommunikationssystems (18) bei getrennter Fluidkommunikation unabhängig von Zustandsänderungen des zweiten Arbeitsraums (16) ist.

2. Streckblasmaschine nach Anspruch 1,
**dadurch gekennzeichnet, dass**
die mindestens eine Ventileinrichtung (24a, 24b, 24c) ein Hochdruckventil ist.

3. Streckblasmaschine nach Anspruch 1 oder Anspruch 2,
**dadurch gekennzeichnet, dass**
die Ventileinrichtung (24b, 24c) am ersten Formträger (6) in einer ersten Richtung (X) bewegbar ist, die Ventileinrichtung (24a) an der Expandiereinrichtung (20) in einer zweiten Richtung (Y) bewegbar ist und die Gesamtheit aus Blaseinheit (4) und Expandiereinrichtung (20) in einer weiteren Richtung (Z) auf einer Transportbahn bewegbar ist.

4. Streckblasmaschine nach einem der vorangegangenen Ansprüche,
**dadurch gekennzeichnet, dass**
das Ventilgehäuse (26) der Ventileinrichtung (24a) der Expandiereinrichtung (20) an einem Linearschlitten (28) angebracht ist.

5. Streckblasmaschine nach einem der Ansprüche 1 bis 3,
**dadurch gekennzeichnet, dass**
das Ventilgehäuse (26) der am ersten Formträger (6) angeordneten Ventileinrichtung (24b, 24c) zumindest teilweise durch den ersten Formträger (6) ausgebildet ist.

6. Streckblasmaschine nach einem der vorangegangenen Ansprüche,
**dadurch gekennzeichnet, dass**
das Arbeitsfluid ein Gas, insbesondere Reinluft, ist.

7. Streckblasmaschine nach einem der vorangegangenen Ansprüche,
**dadurch gekennzeichnet, dass**
die Ventileinrichtung/en (24a, 24b, 24c) aktiv ansteuerbar ist/sind.

8. Streckblasmaschine nach einem der vorangegangenen Ansprüche,
**dadurch gekennzeichnet, dass**
der erste Arbeitsraum (14) und der zweite Arbeitsraum (16) durch eine bewegbare Wandung, insbesondere ein bewegbares Blasformteil (10, 12), voneinander abgegrenzt sind.

9. Streckblasmaschine nach einem der vorangegangenen Ansprüche,
**dadurch gekennzeichnet, dass**
das Volumen des ersten Arbeitsraums (14) und das Volumen des zweiten Arbeitsraums (16) in der Summe dem Gesamtarbeitsraumvolumen entspricht.

10. Verfahren zum Umformen von Kunststoffvorformlingen in Behältnisse (2), mindestens umfassend die Schritte:
- Bereitstellen eines Arbeitsfluids mittels eines Fluidkommunikationssystems (18) zum Leiten des Arbeitsfluids von einer Fluidquelle (32) zu mindestens einer ersten Ventileinrichtung (24a), die zeitweise einen ersten Arbeitsraum (14) vollständig von dem Fluidkommunikationssystem (18) trennt, und/oder mindestens einer zweiten Ventileinrichtung (24b, 24c), die zeitweise einen zweiten Arbeitsraum (16) von dem Fluidkommunikationssystem (18) trennt, wobei der erste Arbeitsraum (14) durch mindestens einen ersten und einen zweiten Formträger (6, 8) zum Aufnehmen von jeweils mindestens einem Blasformteil (10, 12), die zeitweise zueinander bewegbar, miteinander verbindbar und zum Ausgeben der Behältnisse (2) voneinander lösbar sind, ausgebildet wird und ein zweiter Arbeitsraum (16) zumindest zwischen einem Blasformteil (10) und dem ersten Formträger (6) ausgebildet ist, und
- Trennen der Fluidkommunikation zwischen dem Fluidkommunikationssystem (18) und dem zweiten Arbeitsraum (16),
**dadurch gekennzeichnet, dass**
bei getrennter Fluidkommunikation eine Zustandsänderung im zweiten Arbeitsraum (16) unabhängig vom Zustand des Arbeitsfluids im Fluidkommunikationssystem (18) durchgeführt wird.
